# EUROPÄISCHE PATENTSCHRIFT

(11) **EP 0 486 759 B1**
(45) Veröffentlichungstag und Bekanntmachung des Hinweises auf die Patenterteilung: **02.03.1994**
(21) Anmeldenummer: 91110166.5
(22) Anmeldetag: 20.06.1991
(51) Int. Cl.: F23G 7/06, F23J 15/00, F27D 17/00, B01D 53/34

(54) **Verfahren und Vorrichtung zum Weiterbehandeln und Reinigen von in einem Sekundär-Aluminium-Schmelzwerk entstehenden Abgasen**
Process and device for subsequent treatment and purification of waste gas originating from a secondary aluminium foundry
Procédé et dispositif de traitement ultérieur et purification des gaz d'échappement formés dans une fonderie d'aluminium secondaire

(30) Priorität: 23.11.1990 DE 4037370
(43) Veröffentlichungstag der Anmeldung: 27.05.1992
(73) Patentinhaber: ERE Emmer Recycling und Entsorgung GmbH, D-90596 Schwanstetten (DE)
(72) Erfinder: Sommer, Hermann, Wilhelm, Dr. Dipl.-Ing., W-8000 München 60 (DE); Schloderer, Robert, Dipl.-Ing., W-8032 Gräfelfing (DE); Neubacher, Franz P., Dipl.-Ing., A-2000 Stockerau (AT)

(56) Entgegenhaltungen:
- EP-A- 0 185 879
- DE-A- 2 005 220
- DE-A- 3 920 519

## Beschreibung

Sekundär-Aluminium-Schmelzwerke dienen der Aufbereitung und dem Einschmelzen von Aluminiumschrotten, dem Warmhalten, der metallurgischen Behandlung und der Raffination von Schmelzen sowie dem Vergießen zu Blöcken bzw. dem Abtransport in flüssiger Form.

Als Schrotte werden z.B. blanke und lackierte Blechschrotte, Folien, neue und alte Gußschrotte, Krätzen, Gröben und Späne eingeschmolzen.

Ein herkömmliches Sekundär-Aluminium-Schmelzwerk arbeitet nach folgendem Verfahren:

Die Schrotte werden vorsortiert und aufbereitet. Hinsichtlich ihrer Fremdanteile und Legierungsbestandteile einheitliche Schrotte werden direkt eingeschmolzen. Späne werden in einer Späneaufbereitungsanlage thermisch gereinigt und getrocknet. Aluminiumkrätzen werden mechanisch in Mahl- und Siebanlagen aufbereitet.

Das Einschmelzen der vorbereiteten Schrotte erfolgt chargenweise in rotierenden Drehtrommelöfen unter einer Salzschmelze, die Verunreinigungen aufnimmt und bedarfsweise erneuert wird. Das Schmelzsalz aus natürlichen Vorkommen besteht hauptsächlich aus einer Mischung von Kochsalz (NaCl, KCl) und einer Beimischung aus ca. 2% CaF₂. Zum Rückschmelzen von 1 to Metallegierungen werden ca. 300 bis 400 kg Schmelzsalz benötigt. Die verunreinigten Salzschmelzen werden in offene Wannen als Salzschlacken abgegossen, nach dem Erstarren zu kompakten Massen zwischengelagert bis zum Abtransport an die Salzschlackenwiederaufbereitungsanlage. Die Metallschmelzen aus den Drehtrommelöfen werden in Warmhalteöfen (Konverter) überführt, in denen metallurgisch behandelt, nachgereinigt (Raffination) und nachlegiert wird. Die Raffination erfolgt durch Einleiten von Raffinationsgasen (Chlor, Stickstoff, Argon). Die bei dieser Behandlung abgeschiedenen Stoffe schwimmen auf und werden als Krätze abgezogen. Diese Krätze wird aufbereitet und rückgeschmolzen. Die aufbereiteten Schmelzen werden dann entweder zu Blöcken vergossen oder in Isolierbehälter für den Flüssigtransport zu Gießereien umgefüllt.

Die Abgase der Trommelöfen und der Warmhalteofen (Konverter) werden einem Fuchssystem (Abgaskanal) zugeleitet. Die Rohgase werden über Stahlblech-Rohrleitungen dem Wärmetauscher zugeführt. In den nachfolgenden Flachschlauch-Filtern findet die endgültige Abtrennung von Staub statt. Der Staub wird zu einem zentralen Staubaustragspunkt transportiert. Die gereinigte Abluft strömt über den nachgeschalteten Absaugventilator und Kamin in die Atmosphäre. Die Reingaswerte entsprechen der TA-Luft 1986.

Jedoch werden heute höhere Anforderungen an die Abgasreinigung gestellt, die mit einem herkömmlich arbeitenden Schmelzwerk nicht mehr realisiert werden können. Es treten vor allem Probleme bezüglich der Einhaltung des Gesamt C-Wertes und der in Kürze vorgeschriebenen Dioxingrenzwerte auf.

Durch die DE-A-3 920 519 ist ein Verfahren und eine Vorrichtung zum Reinigen von Metallteilen bekanntgeworden, wobei die bei der Behandlung der Metalle entstehenden Abgase in einer Nachverbrennungsanlage vollständig verbrannt und über einen Kamin abgeleitet werden.

Der Erfindung liegt die Aufgabe zu Grunde, ein Verfahren und eine Vorrichtung anzugeben, mit welchem/welcher die beim Schmelzen und Behandeln von Aluminiumschrotten in einem Sekundärschmelzwerk entstehenden Abgase wirksam gereinigt und von Schadstoffen befreit werden können.

Diese Aufgabe wird verfahrensmäßig mit den im Anspruch 1 angegebenen Merkmalen, vorrichtungsmäßig mit den im Anspruch 3 angegebenen Merkmalen, gelöst.

Der wesentliche Vorteil des erfindungsgemäßen Verfahrens und der Vorrichtung zu seiner Durchführung liegt darin, daß auf technisch einfache, sehr wirkungsvolle Weise die praktisch vollständig von schädlichen Stoffen befreiten Abgase strengsten gesetzlichen Vorschriften genügen, wobei sie gleichzeitig auch der Dampferzeugung und der Verbrennung von Reststoffen dienen.

Eine zweckmäßige weitere Ausgestaltung des erfindungsgemäßen Verfahrens ergibt sich aus dem Patentanspruch 2, weitere Ausgestaltungen der erfindungsgemäßen Vorrichtung ergeben sich aus den Patentansprüchen 4 und 5.

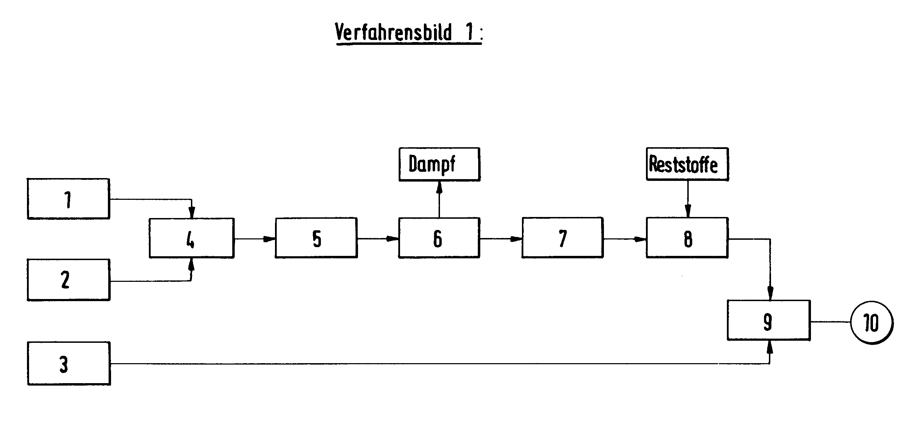

Die Erfindung wird nachfolgend an einem Ausführungsbeispiel anhand der beigefügten Zeichnung in Form eines Blockschemas näher erläutert.

Die Schrottaufbereitung und das Einschmelzen der aufbereiteten Aluminiumschrotte erfolgt nach dem herkömmlichen Verfahren.

Das Wesentliche besteht in der Erfassung der einzelnen Abgasströme und deren thermische Nachverbrennung und der Erzeugung der erforderlichen Energie hierfür aus Reststoffen. Die Abgasströme eines Drehtrommelofens 1, eines Konverters 3 und einer Spänetrocknungsanlage 2 werden getrennt erfaßt. Die Abgasströme des Drehtrommelofens 1 mit ca. 800 bis 900°C und der Spänetrocknungsanlage 2 mit ca. 400 bis 500°C werden in einer Mischkammer 4 zusammengeführt und über einen Grobabscheider 5 einem Kesselhaus 6 zugeführt. In diesem Kesselhaus 6 wird der heiße Abgasstrom von ca. 600°C auf ca. 150°C herabgekühlt und dabei Dampf erzeugt. Mittels eines nachgeschalteten Saugzug-Gebläses 7 wird der Abgasstrom verdichtet und einem Verbrennungsofen 8, wie z.B. einem Wirbelschichtofen als Trägergas zugeführt. In diesem Ofen wird das Abgas aus dem Sekundär-Aluminium-Schmelzwerk bei Temperaturen oberhalb 800°C vollständig nachverbrannt. Für die Erreichung der hohen Nachverbrennungstemperaturen werden im Verbrennungsofen 8 zusätzlich Reststoffe mit hohem Heizwert, wie z.B. Shredderleichtfraktionen aus der Automobilverwertung, Reject-Material aus der Altpapierverwertung oder kunststoffhaltige Rückstände aus der Müllaufbereitung eingesetzt und bei Temperaturen oberhalb 800°C vollständig verbrannt. Zur anschließenden Reinigung wird ein Reinigungssystem 9,bestehend aus Staubfilter, Gaswäscher und Aktivkohlefilter eingesetzt. Die Abgasströme des Konverters 3 werden mittels Saugzug-Gebläse dem Gaswäscher direkt zugeführt. Die gereinigten Abgase werden über einen Kamin 10 abgeleitet.

## Patentansprüche

1. Verfahren zum Weiterbehandeln und Reinigen von beim Einschmelzen, metallurgischen Behandeln, Nachreinigen und Nachlegieren vorbereiteter Aluminium-Schrotte in einem Sekundär-Aluminium-Schmelzwerk entstehenden Abgasen, welche nachverbrannt und über einen Kamin abgeleitet werden,
**dadurch gekennzeichnet**,
daß die einzelnen Abgasströme aus einer Schmelzstufe, welche die Abgase mit einer Temperatur von ca. 800 bis 900°C verlassen, und aus einer Trocknungsstufe, welche die Abgase mit einer Temperatur von ca. 400 bis 500°C verlassen, gemischt und über einen Grobabscheider einer Kühlstufe zugeführt werden, in welcher sie von ca. 600°C auf ca. 150°C herabgekühlt werden und der dabei erzeugte Dampf abgezogen und weiterverwendet wird, und daß die abgekühlten Abgase verdichtet und als Trägergas zusammen mit zusätzlichen Reststoffen mit hohem Heizwert bei Temperaturen oberhalb 800°C vollständig verbrannt werden.

2. Verfahren nach Anspruch 1, dadurch gekennzeichnet, daß als Reststoffe Shredderleichtfraktionen aus der Automobil-Verwertung, Reject-Material, aus der Altpapierverwertung oder kunststoffhaltige Rückstände aus der Müllaufbereitung eingesetzt werden.

3. Vorrichtung zur Durchführung des Verfahrens nach Anspruch 1, wobei zum Einschmelzen der vorbereiteten Schrotte unter einer Salzschmelze ein Drehtrommelofen (1) vorgesehen ist, und die Metallschmelze aus dem Drehtrommelofen in einem Warmhalteofen (3) (Konverter) metallurgisch behandelt, nachgereinigt und nachlegiert wird, dadurch gekennzeichnet, daß ein Spänetrockner (2) und der Drehtrommelofen (1) einer Mischkammer (4) vorgeschaltet sind, in welcher die den Spänetrockner und den Drehtrommelofen verlassenden Abgase gemischt werden und anschließend über einen Grobabscheider (5) einem Kessel (6) zuführbar sind, daß zwischen dem Kessel (6) und dem Verbrennungsofen (8), der mit einer Einrichtung zum Eintrag von Reststoffen mit hohem Brennwert versehen ist, ein Saugzug-Gebläse (7) vorgesehen ist, und daß dem Verbrennungsofen (8) eine Reinigungsvorrichtung (9) nachgeschaltet ist, welche auch das Abgas aus dem Warmhalteofen (3) erhält.

4. Vorrichtung nach Anspruch 3, dadurch gekennzeichnet, daß der Verbrennungsofen (8) ein Wirbelschichtofen ist.

5. Vorrichtung nach Anspruch 4, dadurch gekennzeichnet, daß die Reinigungsvorrichtung (9) einen Staubfilter, einen Gaswäscher und einen Aktivkohlefilter umfaßt.

## Claims

1. Method of further treating and purifying waste gases, which are produced during the smelting, metallurgical treatment, subsequent purification and subsequent alloying of prepared aluminium scraps in a secondary aluminium smelting works, said waste gases being subsequently burned and discharged via a chimney, characterised in that the individual waste gas streams from a smelting stage, which the waste gases leave at a temperature of approximately 800 to 900°C, and from a drying stage, which the waste gases leave at a temperature of approximately 400 to 500°C, are mixed and supplied, via a coarse separator, to a cooling stage, in which said waste gases are cooled from approximately 600°C to approximately 150°C, and the vapour produced thereby is drawn-off and used subsequently, and in that the cooled waste gases are compressed and totally burned as carrier gas together with additional residual substances at a high heating power at temperatures above 800°C.

2. Method according to claim 1, characterised in that lightweight shredder fractions from scrap automobiles, rejection material from waste-paper or residues from refuse treatment containing plastics materials are used as residual substances.

3. Device for accomplishing the method according to claim 1, wherein a rotary drum furnace (1) is provided for smelting the prepared scraps beneath a fused salt bath, and the molten metal from the rotary drum furnace is treated metallurgically in a heat retaining furnace (3) (converter), subsequently purified and subsequently alloyed characterised in that a chip drier (2) and the rotary drum furnace (1) are connected upstream of a mixing chamber (4), in which, the waste gases leaving the chip drier and the rotary drum furnace are mixed and are subsequently suppliable to a boiler (6) via a coarse separator (5), in that an exhaust fan (7) is provided between the boiler (6) and the combustion furnace (8), which is provided with a means for feeding residual substances with a high calorific value, and in that a purifying device (9) is connected downstream of the combustion furnace (8) and also receives the waste gas from the heat-retaining furnace (3).

4. Device according to claim 3, characterised in that the combustion furnace (8) is a fluidised bed furnace.

5. Device according to claim 4, characterised in that the purifying device (9) includes a dust filter, a gas scrubber and an active carbon filter.

## Revendications

1. Procédé pour le retraitement et l'épuration de gaz d'échappement produits dans une installation de fusion secondaire d'aluminium lors de la fusion, du traitement métallurgique, de l'épuration et de l'apport en alliage de ferrailles d'aluminium préparées, gaz que l'on brûle et que l'on dirige sur une cheminée,
**caractérisé en ce que**
les divers courants de gaz d'échappement provenant d'un étage de fusion dont les gaz d'échappement sortent avec une température d'environ 800 à 900°C et d'une étage de séchage dont les gaz d'échappement sortent avec une température d'environ 400 à 500°C sont mélangés et dirigés sur un -séparateur grossier d'un étage de refroidissement dans lequel ils sont refroidis d'environ 600°C à environ 150°C et la vapeur produite alors est extraite et réutilisée, et en ce que les gaz d'échappement refroidis sont comprimés et totalement brûlés à des températures supérieures à 800°C comme gaz porteur avec des matières résiduelles additionnelles à pouvoir calorifique élevé.

2. Procédé selon la revendication 1, caractérisé en ce que l'on emploie comme matières résiduelles des fractions légères de shredder de récupération automobile, des matières de rejet de récupération de vieux papiers ou des reliquats de retraitement de déchets.

3. Dispositif pour la mise en oeuvre du procédé selon la revendication 1, dans lequel on prévoit un four à tambour rotatif (1) pour la fusion des ferrailles préparées sous une masse fondue de sel, et soumet la masse fondue de métal provenant du four à tambour rotatif à un traitement métallurgique, une épuration et un apport en alliage dans un four à conservation de chaleur (3) (convertisseur),
**caractérisé en ce qu'**
un séchoir à copeaux (2) et le four à tambour rotatif (1) sont reliés à une chambre de mélange (4) dans laquelle les gaz d'échappement quittant le séchoir à copeaux (2) et le four à tambour rotatif (1) sont mélangés et peuvent être amenés à un caisson (6) par l'intermédiaire d'un séparateur grossier (5), en ce qu'il est prévu, entre le caisson (6) et le four de brûlage (8) qui est lui-même pourvu d'un dispositif pour charger des matières résiduelles à pouvoir calorifique élevé, une soufflerie de canal d'aspiration (7), et en ce qu'est adjoint au four de brûlage (8) un dispositif d'épuration (9) qui reçoit également le gaz d'échappement provenant du four à conservation de chaleur (3).

4. Dispositif selon la revendication 3, caractérisé en ce que le four de brûlage est un four à couches tourbillonnaires.

5. Dispositif selon la revendication 4, caractérisé en ce que le dispositif d'épuration (9) comporte un filtre à poussières, un laveur de gaz et un filtre à charbon actif.
